# EUROPÄISCHE PATENTSCHRIFT

(11) **EP 2 758 276 B1**
(45) Veröffentlichungstag und Bekanntmachung des Hinweises auf die Patenterteilung: **11.05.2016**
(21) Anmeldenummer: 12753507.8
(22) Anmeldetag: 04.09.2012
(51) Int. Cl.: B60R 13/02, B60R 13/04, B60J 5/04, B29C 45/16, B29C 45/00

(54) **SÄULENABDECKUNG FÜR KRAFTFAHRZEUGE**
COLUMN COVER FOR MOTOR VEHICLES
HABILLAGE DE MONTANT POUR VÉHICULES AUTOMOBILES

(30) Priorität: 23.09.2011 EP 11182550
(43) Veröffentlichungstag der Anmeldung: 30.07.2014
(73) Patentinhaber: Saint-Gobain Glass France, 92400 Courbevoie (FR)
(72) Erfinder: SCHMIDT, Sebastian, 70176 Stuttgart (DE); BLANCHE, Luc-Henry, 71409 Schwaikheim (DE); RIEGLER, Ulrich, 31698 Lindhorst (DE)
(74) Vertreter: Gebauer, Dieter Edmund
(86) Internationale Anmeldenummer: PCT/EP2012/067196
(87) Internationale Veröffentlichungsnummer: WO 2013/041367

(56) Entgegenhaltungen:
- EP-A1- 1 695 808
- EP-A1- 2 272 718
- DE-A1- 3 831 274
- DE-A1- 4 219 344
- DE-A1-102007 024 149
- DE-U1- 20 201 528
- JP-A- 2009 029 252

## Beschreibung

Die Erfindung betrifft eine Säulenabdeckung für Kraftfahrzeuge und deren Verwendung.

Im Zuge immer strengerer Vorgaben zur Kohlendioxidemission von Kraftfahrzeugen gibt es starke Bestrebungen das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in praktisch jeder gewünschten Form und Geometrie hergestellt werden. Spezielle Hochleistungskunststoffe wie Aramide, beispielsweise Kevlar weisen sehr hohe Festigkeiten und Stabilitäten auf.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Merkmale im Bereich des Designs und Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen zwei oder mehr Komponenten Spritzgussverfahren. Auf diese Art und Weise ist es möglich, Merkmale wie beispielsweise Witterungsbeständigkeit, Oberflächenglanz und Bruchbeständigkeit oder Torsionsstabilität mit einander zu vereinen. Zudem können die Anteile sehr teurer Werkstoffe reduziert werden.

DE 196 33 959 A1 offenbart einen Formkörper aus einem Träger und einem äußeren Zierfilm. Der äußere Film besitzt eine Zier- und eine Schutzschicht, wobei die Schutzschicht aus einer photopolymerisierbaren Harzzusammensetzung besteht.

WO 2006/094484 A1 offenbart ein Verfahren zur Herstellung eines flächigen, zwei Komponenten enthaltenden Kunststoffkarosserieteils. In einer bevorzugten Ausführungsform sind die erste Komponente aus einem transparenten Polycarbonat und die zweite Komponente aus einem opaken Polycarbonat.

DE 197 22 551 A1 offenbart ein Verfahren zur Herstellung von Kunststoffteilen im Zwei-Komponenten-Spritzgussverfahren.

EP 1 695 808 A1 offenbart ein Zierteil für ein Kraftfahrzeug, beispielsweise eine Zierleiste. Das Zierteil umfasst ein Trägerteil aus einem thermoplastischen Kunststoff und ein Deckteil. Das Zierteil wird bevorzugt über einen Mehrkomponenten-Spritzgussprozess hergestellt.

EP 2 272 718 A1 offenbart eine Säulenabdeckung nach dem Oberbegriff von Anspruch 1.

Aufgrund der unterschiedlichen Materialeigenschaften der einzelnen Polymere im Werkstück kommt es bei der Herstellung im Mehrkomponenten Spritzgussprozess zu Unterschieden im Abkühlverhalten. Unterschiede in der Wärmeabfuhr können so zu unterschiedlichen Schwindungsverhalten führen, das wiederum zu einem inhomogenen Erscheinungsbild am fertigen Werkstück führt. Insbesondere bei Werkstücken mit transparenten oder hochglänzenden Elementen führt dies leicht zu einer Störung der Reflexionsoptik und damit einem geringwertigen Aussehen vor allem im Kantenbereich.

Die Erfindung hat die Aufgabe, ein Werkstück aus mindestens zwei unterschiedlichen Werkstoffen bereitzustellen, welches einen gleichmäßigen Kantenbereich bei gleichzeitig unterschiedlichen Materialschwindungsverhalten aufweist.

Die Aufgabe der Erfindung wird durch eine Säulenabdeckung für Fahrzeuge gemäß Anspruch 1 gelöst. Bevorzugte Ausführungen gehen aus den Unteransprüchen hervor.

Die erfindungsgemäße Verwendung der Säulenabdeckung für Fahrzeuge geht aus einem weiteren unabhängigen Anspruch hervor. Bevorzugte Ausführungen gehen aus den Unteransprüchen hervor.

Die erfindungsgemäße Säulenabdeckung für Fahrzeuge umfasst mindestens ein polymeres Trägerteil mit einem integrierten Fensterführungssteg sowie einer Verjüngung zwischen dem polymeren Trägerteil und dem Fensterführungssteg. Der bevorzugt angespritzte Fensterführungssteg steht vom eigentlichen Trägerteil ab und die genaue Dimensionierung hängt von der Geometrie des passenden Werkstücks am Fahrzeug ab. Der Fensterführungssteg ist bevorzugt näherungsweise L-förmig ausgebildet und weist bevorzugt im abstehenden Bereich einen Winkel von 45° bis 135° zur Grundfläche des polymeren Trägerteils auf. Der Fensterführungssteg weist bevorzugt in beiden Teilstegen eine Länge von jeweils 10 mm bis 20 mm auf. Der Ausdruck "verjüngt" bedeutet im Sinne der Erfindung eine lineare oder graduelle Abnahme der Dicke des Fensterführungsstegs benachbart oder angrenzend zur Grundfläche des polymeren Trägerteils. Diese Abnahme der Dicke des integrierten Fensterführungsstegs gewährleistet eine verbesserte Reflexionsoptik auf der Sichtseite der Säulenabdeckung und erlaubt eine Gewichtsreduzierung der Säulenabdeckung und eine Ersparnis an polymerem Ausgangsmaterial. Der Fensterführungssteg ist bevorzugt aus demselben Werkstoff wie das polymere Trägerteil gefertigt und wird bevorzugt durch Formwerkzeuge mit entsprechenden Aussparungen im Spritzgussverfahren hergestellt.

Das polymere Trägerteil sorgt für die Stabilität der Säulenabdeckung und beinhaltet polymere Materialien mit einer möglichst hohen Festigkeit, Kratzfestigkeit, Schlagzähigkeit oder Kerbschlagzähigkeit und geringerer Bruchneigung. Das polymere Trägerteil umfasst bevorzugt ein Montageelement. Das Montageelement ist bevorzugt F-förmig ausgebildet. Die genaue Formgebung des Montageelementes richtet sich dabei nach dem entsprechenden Gegenstück der Karosserie.

Mit dem polymeren Trägerteil ist ein polymeres Deckteil über eine Kontaktfläche verbunden. Der Ausdruck "Kontaktfläche" beschreibt die Grenzfläche zwischen dem polymeren Trägerteil und dem polymeren Deckteil. Das polymere Deckteil kann sowohl dekorative Funktionen als auch Funktionen im Bereich der Werkzeugbeständigkeit übernehmen. Beispiele hierfür sind Oberflächen oder Beschichtungen welche die witterungs-, UV- oder chemische Beständigkeit der Säulenabdeckung erhöhen. Das polymere Trägerteil und das polymere Deckteil bilden mindestens ein gemeinsames abgerundetes Endstück. Der Ausdruck "Endstück" bezieht sich im Sinne der Erfindung bevorzugt auf einen endständigen Bereich in dem die Gesamtdicke aus polymerem Trägerteil und polymerem Deckteil oder deren Einzeldicken graduell oder linear abnehmen. Die Kontaktfläche zwischen polymerem Trägerteil und polymerem Deckteil verläuft innerhalb des Endstücks über eine Länge von mindestens 1 mm (gemessen vom Rand des Endstücks) in einem gemittelten Winkel von 5° bis 60° (Grad) zum polymeren Trägerteil hin oder von dem polymeren Trägerteil weg gerichtet (oberhalb oder unterhalb zur gemittelten Achse der Kontaktfläche zwischen dem polymeren Trägerteil und dem polymeren Deckteils außerhalb des/der Endstücks/e). Die Kontaktfläche kann linear oder gekrümmt verlaufen. Die Kontaktfläche verläuft innerhalb des Endstücks bevorzugt über eine Länge von 2 mm bis 20 mm in einem gemittelten Winkel von 10° bis 50°. Die Verschiebung der Kontaktfläche von der gemittelten Achse der Kontaktfläche zwischen dem polymeren Trägerteil und dem polymeren Deckteil (Horizontalen) bewirkt eine Ausdünnung des Anteils an polymerem Trägerteil oder polymerem Deckteil im Endstück. Diese Ausdünnung einer Materialkomponente vom polymeren Trägerteil oder polymeren Deckteil erlaubt eine Anpassung des Schwindungs- und Abkühlverhaltens im Endstück. Auf diese Art und Weise wird die Bildung von optischen Verzerrungen im Endstück verhindert. Bei langsamerer Abkühlung des polymeren Trägerteils kann die Masse von diesem im Bereich des Endstücks verringert werden und so ein insgesamt schnelleres Abkühlen bei geringerer Masse, bevorzugt gleichzeitig mit dem polymeren Deckteil ermöglichen.

Je nach Geometrie der Säulenabdeckung können noch weitere gemeinsame, bevorzugt abgerundete, Endstücke vorhanden sein. Diese erfindungsgemäße Kantengeometrie kann umlaufend an allen gemeinsamen Kanten vom polymeren Trägerteil und polymeren Deckteil innerhalb der Säulenabdeckung oder nur an einzelnen Bauteilkanten ausgebildet sein.

Die Verjüngung verjüngt sich bevorzugt von 1 mm bis 4 mm auf 0,2 mm bis 2 mm. Diese Abmessungen erlauben eine hohe Stabilität innerhalb der Verjüngung bei gleichzeitig minimalem Gewicht.

Eine Versteifungsrippe ist bevorzugt innerhalb der Verjüngung, besonders bevorzugt sind mehrere Versteifungsrippen innerhalb der Verjüngung angebracht. Die Versteifungsrippen erhöhen deutlich die Stabilität und Bruchsicherheit des Fensterführungsstegs und sind innerhalb der Verjüngung besonders platzsparend angeordnet.

Das polymere Trägerteil enthält bevorzugt Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat (PET), bevorzugt Acrylnitril-Butadien-Styrol (ABS), Acrylester-Styrol-Acrylnitril (ASA), Acrylnitril-Butadien-Styrol - Polycarbonat (ABS+PC) und/oder Copolymere oder Gemische davon.

Der Fensterführungssteg und/oder das Montageelement weisen bevorzugt an der Oberfläche eine Wandstärkenausdünnung auf 0,5 mm bis 3 mm auf, wobei die ausgedünnte Grundwand des Fensterführungsstegs und/oder das Montageelement bevorzugt durch eine wabenartige, kreisförmige oder poligonale erhöhte Oberflächenstruktur, besonders bevorzugt eine hexagonale erhöhte bienenwabenartige Oberflächenstruktur verstärkt werden. Die erhöhte Oberflächenstruktur gewährleistet auch bei Ausdünnung der Wandstärke die Stabilität und Bruchsicherheit des Fensterführungsstegs und/oder des Montageelements. Die Wandstärkenausdünnung verringert das Gewicht der Säulenabdeckung. Die erhöhte Struktur weist bevorzugt eine Dicke von 0,2 mm bis 1,5 mm auf. Die Gesamtdicke aus Fensterführungssteg und der erhöhten Oberflächenstruktur ist bevorzugt um den Faktor 1,2 bis 3 größer ist als die Dicke des darunterliegenden Fensterführungsstegs. Der genannte Faktor gewährleistet ein optimales Gewicht- zu Stabilitätsverhältnis des Fensterführungsstegs.

Die erhöhte Oberflächenstruktur weist bevorzugt eine Schrägstellung von 1 ° bis 15 ° relativ zur Senkrechten auf der Oberfläche des Fensterführungsstegs und/oder das Montageelements unterhalb der Oberflächenstruktur auf. Diese Entformungsschräge verbessert das Herauslösen des bruchempfindlichen Fensterführungsstegs und/oder des Montageelements aus der Spritzgussform.

Der Fensterführungssteg und/oder das Montageelement weisen in einer optionalen Ausgestaltungsform die erhöhte Oberflächenstruktur an Bereichen des Fensterführungsstegs und/oder des Montageelements ohne Wandstärkenausdünnung auf.

Das polymere Deckteil enthält bevorzugt Polycarbonate (PC), Polymethylmethacrylat (PMMA), Styrol-Acrylnitril (SAN) und/oder Copolymere oder Gemische davon. Diese Polymere erlauben eine Verarbeitung zu hochglänzenden, teilweise glasähnlichen Oberflächen.

Das polymere Trägerteil enthält bevorzugt anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Trägerteils weiter erhöhen. Zudem können die Füllstoffe die Materialkosten senken oder gegebenenfalls die Feuerfestigkeit des polymeren Trägerteils erhöhen.

Das Montageelement weist bevorzugt eine Dichtlippe auf. Die Dichtlippe ermöglicht einen flexiblen und abdichtenden Einbau der Säulenabdeckung im Fahrzeug.

Das polymere Deckteil enthält bevorzugt einen Hardcoat, besonders bevorzugt thermisch- oder UV-härtende Lacke, besonders bevorzugt Polysiloxane, Polyacrylate, Polymethacrylate und/oder Gemische oder Copolymere davon. Der Hardcoat verbessert die Beständigkeit gegenüber mechanischen Kratzbeschädigungen, Witterungseinflüssen, UV-Strahlung und/oder aggressiven Chemikalien aus der Luft oder dem Bodenwasser. Zusätzlich kann der Hardcoat auch noch dekorative Funktionen wahrnehmen.

Das polymere Deckteil weist bevorzugt eine mittlere optische Transparenz von mehr als 60 %, bevorzugt mehr als 80 % im Bereich von 400 nm bis 800 nm auf. Die hohe optische Transparenz verleiht dem polymeren Deckteil ein glasähnliches Aussehen bei nur geringem Eigengewicht.

Die Versteifungsrippen weisen bevorzugt einen Abstand von 1 cm bis 15 cm, bevorzugt 2 cm bis 10 cm auf. Die so platzierten Versteifungsrippen erhöhen deutlich die Stabilität und Bruchsicherheit des Fensterführungsstegs.

Der Fensterführungssteg und/oder das Montageelement weisen bevorzugt auf der der Verjüngung gegenüberliegende Seite Verstärkungsrippen auf, welche die Stabilität des Fensterführungsstegs und/oder des Montageelements weiter erhöhen. Die Säulenabdeckung enthält besonders bevorzugt Versteifungsrippen und Verstärkungsrippen.

Die erfindungsgemäße Säulenabdeckung wird bevorzugt über ein Mehrkomponenten-Spritzgießverfahren oder ein Mehrkomponenten-Spritzprägeverfahren hergestellt.

Die Erfindung umfasst des Weiteren die Verwendung der Säulenabdeckung in Fahrzeugen, bevorzugt Kraftfahrzeugen, Lastkraftwagen, Bussen, besonders bevorzugt als Zierleiste in Kraftfahrzeugen.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt einer Säulenabdeckung nach dem Stand der Technik,
Figur 2 einen Querschnitt einer erfindungsgemäßen Säulenabdeckung,
Figur 3a einen vergrößerten Querschnitt der Kontaktfläche zwischen dem polymeren Trägerteil und dem polymeren Deckteil,
Figur 3b einen vergrößerten Querschnitt der Kontaktfläche zwischen dem polymeren Trägerteil und dem polymeren Deckteil und
Figur 4 eine dreidimensionale Ansicht einer bevorzugten Ausführungsform der Säulenabdeckung.

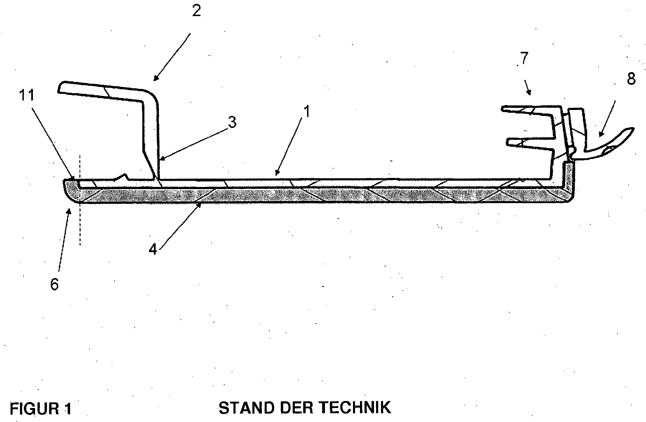

Figur 1 zeigt einen Querschnitt einer Säulenabdeckung nach dem Stand der Technik. Ein polymeres Trägerteil (1) mit einem angespritzten Fensterführungssteg (2) und einem F-förmigen Montageelement (7) mit einer Dichtlippe (8) ist von einem polymeren Deckteil (4) umgeben. Der Fensterführungssteg (2) ist über eine Verjüngung (3) mit dem polymeren Trägerteil (1) verbunden. Der Bereich des abgerundeten Endstücks (6) (links der gestrichelten Linie) geht fließend entlang der Kontaktfläche (11) in das polymere Trägerteil (1) und das polymere Deckteil (4) über. Das polymere Deckteil (4) umschließt im abgerundeten Endstück (6) das polymere Trägerteil (1). Aufgrund unterschiedlicher Materialien des polymeren Deckteils (4) und des polymeren Trägerteils (1) kann es beim Abkühlen nach einem 2-Komponentenspritzgussprozess zu optischen Verzerrungen und zu einer unregelmäßigen Phasengrenze an der Kontaktfläche (11) kommen.

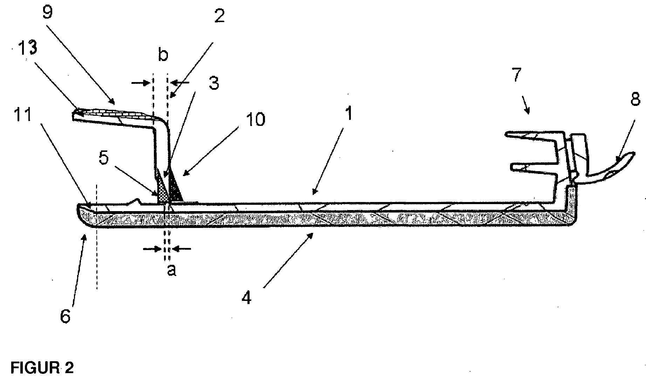

Figur 2 zeigt einen Querschnitt einer erfindungsgemäßen Säulenabdeckung. Der Grundaufbau aus polymerem Trägerteil (1) mit Fensterführungssteg (2), F-förmigem Montageelement (7) mit einer Dichtlippe (8) und polymerem Deckteil (4) entspricht dem in Figur 1 gezeigten. Eine Versteifungsrippe (5) ist innerhalb der Verjüngung (3) angeordnet und erlaubt eine wirksame Stabilisierung des Fensterführungsstegs (2) ohne zusätzlichen Platzbedarf. Der Fensterführungssteg (2) nimmt innerhalb der Verjüngung (3) vom größeren Ausgangsdurchmesser (b) auf den kleineren Durchmesser (a) ab. Der Fensterführungssteg (2) weist eine Wandstärkenausdünnung (13) auf eine Dicke von 0,5 mm bis 3 mm und eine erhöhte Struktur (9) auf. Im Bereich des abgerundeten Endstücks (6) (links der vertikalen gestrichelten Linie) läuft die Kontaktfläche (11) zwischen dem polymeren Trägerteil (1) und dem polymeren Deckteil (4) oberhalb der über den horizontalen Bereich der Kontaktfläche (11) gemittelten Achse (12) (horizontale gestrichelte Linie) in einem Winkel von 5° bis 60°.

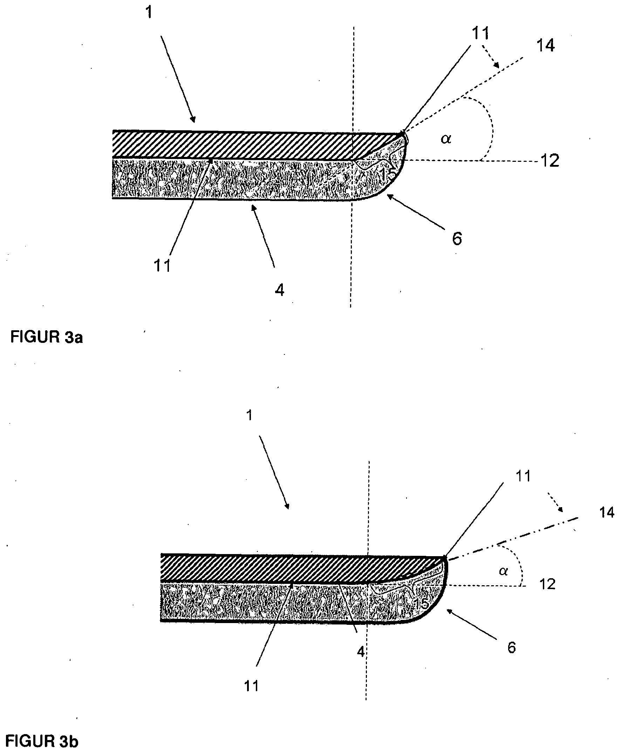

Figur 3a zeigt einen vergrößerten Querschnitt der Kontaktfläche (11) zwischen dem polymeren Trägerteil (1) und dem polymeren Deckteil (4). Innerhalb des Endstücks (6) verläuft die Kontaktfläche (11) über eine Länge (15) von mindestens 1 mm in einem Winkel α (Alfa) von 5° bis 60° zwischen der horizontal gemittelten Achse (12) entlang der Kontaktfläche (11) außerhalb des Endstücks (6) und der gemittelten Achse (14) zwischen dem polymeren Trägerteil (1) und dem polymeren Deckteil (4) innerhalb des Endstücks (6).

Figur 3b zeigt einen weiteren vergrößerten Querschnitt der Kontaktfläche (11) zwischen dem polymeren Trägerteil (1) und dem polymeren Deckteil (4). Innerhalb des Endstücks (6) verläuft die Kontaktfläche (11) über eine Länge (15) von mindestens 1 mm in einem Winkel α (Alfa) von 5° bis 60° zwischen der horizontal gemittelten Achse (12) entlang der Kontaktfläche (11) außerhalb des Endstücks (6) und der gemittelten Achse (14) zwischen dem polymeren Trägerteil (1) und dem polymeren Deckteil (4) innerhalb des Endstücks (6). Die Kontaktfläche (11) verläuft in diesem Beispiel entlang der Länge (15) über eine gekrümmte Strecke. Die Achse (14) wird bevorzugt als einfache lineare Regressionsgerade entlang der Länge (15) ermittelt.

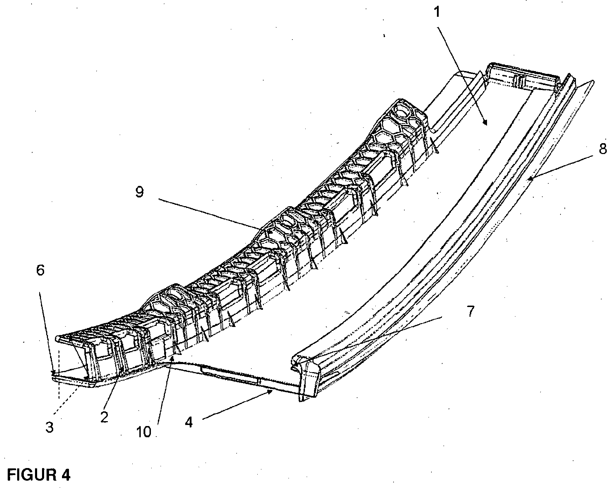

Figur 4 zeigt eine dreidimensionale Ansicht einer bevorzugten Ausführungsform der Säulenabdeckung. Der Aufbau entspricht dem in Figur 2 gezeigten. Die Verjüngung (3) ist aufgrund der Perspektive nicht zu sehen. Die erhöhte, bienenwabenartige Oberflächenstruktur (9) ist in Form von regelmäßigen Sechsecken flächendeckend auf der Oberfläche des Fensterführungsstegs (2) angeordnet. Die erhöhte Oberflächenstruktur (9) verstärkt den Fensterführungssteg (2), erlaubt die Reduzierung der Wandstärke des Fensterführungsstegs (2). Die Verstärkungsrippen (10) können sowohl in regelmäßigem als auch unregelmäßigem Abstand an der Außenseite des Fensterführungsstegs (2) angeordnet werden. Der Bereich des Endstücks (6) ist links der gestrichelten Linie angedeutet.

### Bezugszeichenliste

- (1): polymeres Trägerteil
- (2): Fensterführungssteg
- (3): Verjüngung
- (4): polymeres Deckteil
- (5): Versteifungsrippe
- (6): Endstück
- (7): Montageelement
- (8): Dichtlippe
- (9): erhöhte Struktur
- (10): Verstärkungsrippen
- (11): Kontaktfläche
- (12): Kontaktflächenachse / horizontal über das Bauteil gemittelte Achse (ohne vertikale Anspritzungen)
- (13): Wandstärkenausdünnung
- (14): gemittelte Achse zwischen dem polymeren Trägerteil (1) und dem polymeren Deckteil (4) innerhalb des Endstücks (6)
- (15): Länge der gewinkelten Kontaktfläche innerhalb des Endstücks
- (a): minimale Abmessung der Verjüngung
- (b): maximale Abmessung der Verjüngung
- (α): Winkel (Alfa) im Endstück zwischen der Kontaktfläche und der horizontal gemittelten Kontaktfläche

## Patentansprüche

1. Säulenabdeckung für Fahrzeuge mindestens umfassend:
a. ein Trägerteil (1) mit einem integrierten Fensterführungssteg (2) und einem Montageelement (7),
b. eine Verjüngung (3) an der Berührungsstelle des Fensterführungsstegs (2) zum Trägerteil (1),
c. ein mit dem Trägerteil (1) über eine Kontaktfläche (11) verbundenes polymeres Deckteil (4), wobei,
das Trägerteil (1) und das Deckteil (4) mindestens ein gemeinsames Endstück (6) bilden, **dadurch gekennzeichnet dass** die Kontaktfläche (11) innerhalb des Endstücks (6) über eine Länge (15) von mindestens 1 mm in einem gemittelten Winkel α von 5° bis 60° oberhalb oder unterhalb zu einer gemittelten Achse (12) entlang der Kontaktfläche (11) außerhalb des Endstücks (6) verläuft.

2. Säulenabdeckung nach Anspruch 1, wobei die Verjüngung (3) sich von 1 mm bis 4 mm auf 0,2 mm bis 2 mm verjüngt.

3. Säulenabdeckung nach Anspruch 1 oder 2, wobei eine Versteifungsrippe (5) innerhalb der Verjüngung (3), bevorzugt mehrere Versteifungsrippen (5) innerhalb der Verjüngung (3) angebracht sind.

4. Säulenabdeckung nach einem der Ansprüche 1 bis 3, wobei das Trägerteil (1) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol - Polycarbonat (ABS/PC), PET/PC, PBT/PC und/oder Copolymere oder Gemische davon enthält.

5. Säulenabdeckung nach einem der Ansprüche 1 bis 4, wobei der Fensterführungssteg (2) und/oder das Montageelement (7) eine Wandstärkenausdünnung (13) auf eine Dicke von 0,5 mm bis 3 mm aufweist.

6. Säulenabdeckung nach einem der Ansprüche 1 bis 5, wobei der Fensterführungssteg (2) und/oder das Montageelement (7) eine erhöhte Oberflächenstruktur (9), bevorzugt eine wabenartige kreisförmige oder poligonale erhöhte Oberflächenstruktur (9), besonders bevorzugt eine hexagonale erhöhte Oberflächenstruktur (9) aufweist.

7. Säulenabdeckung nach Anspruch 6, wobei die erhöhte Oberflächenstruktur (9) auf der Wandstärkenausdünnung (13) angeordnet ist,

8. Säulenabdeckung nach einem der Ansprüche 1 bis 7, wobei das Deckteil (4) Polycarbonate (PC), Polymethylmethacrylat (PMMA), Styrol-Acrylnitril (SAN) und/oder Copolymere oder Gemische davon enthält.

9. Säulenabdeckung nach einem der Ansprüche 1 bis 8, wobei das Montageelement (7) F-förmig ausgebildet ist.

10. Säulenabdeckung nach einem der Ansprüche 1 bis 9, wobei das Trägerteil (1) anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthält.

11. Säulenabdeckung nach einem der Ansprüche 1 bis 10, wobei das Montageelement (7) eine Dichtlippe (8) aufweist.

12. Säulenabdeckung nach einem der Ansprüche 1 bis 11, wobei das Deckteil (4) einen Hardcoat, bevorzugt thermisch- oder UV-härtende Lacke, besonders bevorzugt Polysiloxane, Polyacrylate, Polymethacrylate und/oder Gemische oder Copolymere davon enthält.

13. Säulenabdeckung nach einem der Ansprüche 1 bis 12, wobei die Versteifungsrippen (5) einen Abstand von 1 cm bis 15 cm, bevorzugt von 2 cm bis 10 cm aufweisen.

14. Säulenabdeckung nach einem der Ansprüche 1 bis 13, wobei der Fensterführungssteg (2) und/oder das Montageelement (7) Verstärkungsrippen (10) aufweisen.

15. Verwendung der Säulenabdeckung nach einem der Ansprüche 1 bis 14 in Fahrzeugen, bevorzugt Kraftfahrzeugen, Lastkraftwagen, Bussen, besonders bevorzugt als Zierleiste in Kraftfahrzeugen.

## Claims

1. Pillar covering for vehicles comprising at least:
a. a carrier part (1) with an integrated window guide web (2) and a mounting element (7),
b. a narrowing (3) at the point of contact of the window guide web (2) with the carrier part (1),
c. a polymer cover part (4) connected to the carrier part (1) via a contact surface (11), wherein,
the carrier part (1) and the cover part (4) form at least one common end portion (6), **characterized in that** the contact surface (11) inside the end portion (6) runs over a length (15) of at least 1 mm at a mean angle α of 5° to 60° above or below of a mean axis (12) along the contact surface (11) outside the end portion (6).

2. Pillar covering according to claim 1, wherein the narrowing (3) tapers from 1 mm to 4 mm down to 0.2 mm to 2 mm.

3. Pillar covering according to claim 1 or 2, wherein a stiffening rib (5) is fitted inside the narrowing (3), preferably a plurality of stiffening ribs (5) are fitted inside the narrowing (3).

4. Pillar covering according to one of claims 1 through 3, wherein the carrier part (1) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile-butadiene-styrene (ABS), acrylester-styrene-acrylonitrile (ASA), acrylonitrile-butadiene-styrene - polycarbonate (ABS/PC), PET/PC, PBT/PC, and/or copolymers or mixtures thereof.

5. Pillar covering according to one of claims 1 through 4, wherein the window guide web (2) and/or the mounting element (7) has a wall thickness thinning (13) to a thickness of 0.5 mm to 3 mm.

6. Pillar covering according to one of claims 1 through 5, wherein the window guide web (2) and/or the mounting element (7) has a raised surface structure (9), preferably a honeycomb, circular or polygonal raised surface structure (9), particularly preferably a hexagonal raised surface structure (9).

7. Pillar covering according to claim 6, wherein the raised surface structure (9) is disposed on the wall thickness thinning (13).

8. Pillar covering according to one of claims 1 through 7, wherein the cover part (4) contains polycarbonates (PC), polymethyl methacrylate (PMMA), styreneacrylonitrile (SAN), and/or copolymers or mixtures thereof.

9. Pillar covering according to one of claims 1 through 8, wherein the mounting element (7) is configured F-shaped.

10. Pillar covering according to one of claims 1 through 9, wherein the carrier part (1) contains inorganic or organic fillers, preferably SiO₂, Al₂O₃, TiO₂, clay minerals, silicates, zeolites, glass fibers, carbon fibers, glass beads, organic fibers, and/or mixtures thereof.

11. Pillar covering according to one of claims 1 through 10, wherein the mounting element (7) has a sealing lip (8).

12. Pillar covering according to one of claims 1 through 11, wherein the cover part (4) includes a hard coat, preferably a thermal- or UV-curing coating, particularly preferably polysiloxanes, polyacrylates, polymethacrylates, and/or mixtures or copolymers thereof.

13. Pillar covering according to one of claims 1 through 12, wherein the stiffening ribs (5) are from 1 cm to 15 cm apart, preferably 2 cm to 10 cm.

14. Pillar covering according to one of claims 1 through 13, wherein the window guide web (2) and/or the mounting element (7) has reinforcing ribs (10).

15. Use of the pillar covering according to one of claims 1 through 14 in vehicles, preferably motor vehicles, trucks, buses, particularly preferably as a trim strip in motor vehicles.

## Revendications

1. Habillage de montant pour véhicules ayant au moins:
a. un élément de support (1) avec un montant de guide-vitre intégré (2) et un élément d'assemblage (7),
b. un rétrécissement (3) au point de contact du montant de guide-vitre (2) avec l'élément de support (1),
c. un élément de couverture (4) polymère associé à l'élément de support (1) par une surface de contact (11), où
l'élément de support (1) et l'élément de couverture (4) forment au moins un embout, **caractérisé en ce que** la surface de contact (11) s'étend à l'intérieur de l'embout sur une longueur (15) d'au moins 1 mm à un angle moyen α de 5° à 60° au-dessus ou au-dessous d'un axe moyen (12) le long de la surface de contact (11) à l'extérieur de l'embout.

2. Habillage de montant selon la revendication 1, où le rétrécissement (3) rétrécit de 1 à 4 mm vers 0,2 mm à 2 mm.

3. Habillage de montant selon la revendication 1 ou 2, où une nervure de raidissement (5) est attachée dans le rétrécissement (3), de préférence plusieurs nervures de raidissement (5) sont attachées dans le rétrécissement (3).

4. Habillage de montant selon l'une des revendications 1 3, où l'élément de support (1) contient du polyéthylène (PE), du polycarbonate (PC), du polypropylène (PP), du polystyrène, du polybutadiène, du polynitrile, du polyester, du polyuréthane, du polyméthacrylate de méthyle, du polyacrylate, du polyamide, du polytéréphtalate d'éthylène (PET), du polytéréphtalate de butylène (PBT), de l'acrylonitrile butadiène styrol (ABS), de préférence de l'acrylonitrile-styrène acrylique (ASA), de l'acrylonitrile-butadiène-styrène-polycarbonate (ABS/PC), PET+PC, PBT+PC et/ou leurs copolymères ou mélanges.

5. Habillage de montant selon l'une des revendications 1 à 4, où le montant de guide-vitre (2) et/ou l'élément de montage (7) présente un amincissement de l'épaisseur de paroi (13) d'une épaisseur de 0,5 mm à 3 mm.

6. Habillage de montant selon revendications 1 à 5, où le montant de guide-vitre (2) et/ou l'élément d'assemblage (7) a une structure de surface accrue (9), préfère une circulaire de type nid d'abeille ou de la texture de surface poligonale a augmenté (9), en particulier préfère qu'un hexagonal déclenché la texture de la surface (9).

7. Habillage de montant selon la revendication 6, où la structure de surface accrue (9) est disposée sur l'amincissement de l'épaisseur de paroi (13).

8. Habillage de montant selon revendications 1 à 7, où l'élément de couverture (4) contient (4) en polycarbonate (PC), polyméthacrylate de méthyle (PMMA), styrène-acrylonitrile (SAN) et/ou copolymères ou leurs mélanges.

9. Habillage de montant selon l'une des revendications 1 à 8, où l'élément d'assemblage (7) est formé en F.

10. Habillage de montant selon l'une des revendications 1 à 9, où l'élément de support (1) contient des matières de remplissage organiques ou inorganiques, de préférence SiO₂, Al₂O₃, TiO2, des minéraux argileux, des silicates, des zéolites, des fibres de verre, des fibres de carbone, des billes de verre, des fibres organiques et/ou leurs mélanges.

11. Habillage de montant selon l'une des revendications 1 à 10, où l'élément d'assemblage (7) présente une lèvre d'étanchéité (8).

12. Habillage de montant selon l'une des revendications 1 à 11, où l'élément de couverture (4) contient un revêtement dur de préférence, des revêtements thermodurcissables ou à durcissement UV, de façon particulièrement préférée des polysiloxanes, des polyacrylates, des polymethacrylates et/ou leurs mélanges ou copolymères.

13. Habillage de montant selon l'une des revendications 1 à 12, où les nervures de raidissement (5) présentent un écart de 1 cm à 15 cm, de préférence de 2 à 10 cm.

14. Habillage de montant selon l'une des revendications 1 à 13, où le montant de guide-vitre (2) et/ou l'élément de montage (7) présente des nervures de renforcement (10).

15. Utilisation d'un habillage de montant selon l'une des revendications 1 à 14 sur des véhicules; préféré des véhicules automobiles, poids lourds, autobus, surtout préférés comme moulure décorative dans des véhicules.
